# FASCICULE DE BREVET EUROPEEN

(11) **EP 0 386 205 B1**
(45) Date de publication et mention de la délivrance du brevet: **28.04.1993**
(21) Numéro de dépôt: 89909572.3
(22) Date de dépôt: 04.08.1989
(51) Int. Cl.: C22B 34/24, C22B 3/00, C01G 33/00, C01G 35/00

(54) **PROCEDE PERFECTIONNE D'OBTENTION DE COMPOSES DE Ta ET(OU) Nb EXEMPTS D'IMPURETES A PARTIR DE MATERIAUX CONTENANT CES METAUX**
VERFAHREN, UM VON VERUNREINIGUNGEN FREIE TANTAL- UND/ODER NIOBIUMVERBINDUNGEN AUS STOFFEN ZU ERHALTEN, WELCHE DIESE METALLE ENTHALTEN
IMPROVED PROCESS FOR OBTAINING IMPURITY-FREE COMPOUNDS OF Ta AND/OR Nb FROM MATERIALS CONTAINING THESE METALS

(30) Priorité: 06.09.1988 FR 8811643
(43) Date de publication de la demande: 12.09.1990
(73) Titulaire: INSTITUT NATIONAL DE RECHERCHE CHIMIQUE APPLIQUEE, F-75012 Paris (FR); EXTRAMET, F-74100 Annemasse (FR)
(72) Inventeur: POLAK, Christian, F-74100 Ambilly (FR); MENIER, Michèle, F-75012 Paris (FR); PREVOST, Michèle, F-91440 Bures-sur-Yvette (FR)
(74) Mandataire: Rinuy, Santarelli
(86) Numéro de dépôt international: FR8900410
(87) Numéro de publication internationale: WO9002823

(56) Documents cités:
- EP-A- 0 041 459
- EP-A-01 855 50
- EP-A-02 412 78
- WO-A-40/4759
- WO-A-70/2068
- DE-B- 2 062 656
- FR-A- 2 316 343
- GB-A- 767 038
- GB-A- 956 614
- GR-A-21 321 27
- US-A- 2 953 453
- US-A- 3 112 991
- US-A- 3 972 710
- US-A-43 093 89
- US-A-46 631 30
- Chemical Abstracts, Vol. 104, 1986 (Columbus, Ohio, US) P. Noual et al.: "Recovery of metals from complex sulfide concentrates in fluosilicic medium by EXTRAMET process", page 258, abstract no. 153109h.

## Description

La présente invention concerne un procédé d'obtention de composés de Nb et (ou) Ta exempts d'impuretés minérales à partir de matériaux contenant l'un ou l'autre de ces métaux ou les deux.

Ces matériaux peuvent être des minerais appartenant à la famille des tantalite, columbite, microlite, pyrochlore ou autres ou des scories des fours à étain.

Jusqu'aux années 60, le procédé connu sous le nom de "procédé Marignac" était l'unique moyen industriel de séparation du niobium et du tantale utilisant des cristallisations fractionnées des sels doubles de potassium, le complexe de niobium formé dans ces conditions étant le moins soluble.

Cette procédure a été supplantée à l'échelle industrielle par des techniques d'extraction par solvant après une lixiviation acide du minerai.

L'acide utilisé principalement pour la lixiviation est l'acide fluorhydrique employé soit seul, soit en mélange avec l'acide sulfurique ; outre son efficacité dans le processus de lixiviation. ce dernier a des propriétés spécifiques qui permettent le traitement de minerais riches en calcium (formation de sulfate de calcium insoluble ; EP-A-0.041.459).

La phase de séparation de Nb et (ou) Ta par extraction par solvant est ensuite réalisée a partir de solutions acides fluosulfuriques concentrées. Parmi les extractants connus du niobium et du tantale on citera la méthylisobutylcétone (MIBK), la cyclohexanone, le tributylphosphate (TBP), les amides du type dialkylacétamide ou les sels d'ammonium quaternaire.

Malgré les performances intéressantes obtenues, une lixiviation réalisée avec HF concentré et chaud présente un certain nombre d'inconvénients sur le plan de l'équipement, des coûts, et de la sécurité.

La tendance a donc été de diminuer la consommation de HF ; ainsi un prétraitement de scories de fours à étain en milieu acide fluorhydrique ou fluosilicique (H₂SiF₆) permet de rendre insolubles certaines impuretés US-A-3.972.710). Ce procédé couvre une méthode de prétraitement dont la fonction est la transformation des impuretés en fluorures insolubles lors de la deuxième étape de lixiviation par HF, et conduit donc à une diminution de la consommation de cet acide. Il est à noter que le niobium et le tantale sont donnés comme insolubles à l'attaque fluosilicique dans le prétraitement.

Dans DE-C-3.441.582, H₂SiF₆ combiné à HF est conseillé pour l'attaque de concentrés de Nb et Ta contenant des métaux alcalins comme impuretés, l'acide fluosilicique permettant de séparer ces derniers sous forme de fluosilicates alcalins insolubles, ce qui a pour effet d'améliorer la solubilisation de Nb et Ta. Mais, dans ce cas également c'est HF qui est l'agent de solubilisation des espèces Nb et Ta.

Pour pallier les inconvénients liés à la présence de HF il a aussi été préconisé d'utiliser une source contrôlée d'ions fluorures ou fluorures complexes par addition dans un milieu acide (de préférence HCl) d'un sel normalement insoluble dans le milieu considéré (de préférence CaF₂) (FR-A-2.316.343).

Par ailleurs, il est connu que, dans certains cas, et pour certains minerais, on peut utiliser l'acide fluosilicique pour en permettre l'attaque (WO-A-84/04759). Toutefois, il n'est nullement suggéré de faire appel à cet acide pour les matériaux renfermant une proportion non négligeable de Nb et Ta et en vue de la récupération de ces métaux réputés insolubles dans H₂SiF₆.

De toute façon, il n'a jamais été envisagé dans la pratique d'utiliser seul ce dernier acide pour la lixiviation de minerais ou concentrés du niobium et du tantale, certains procédés n'envisageant l'utilisation de H₂SiF₆ que pour diminuer la consommation de HF qui reste l'agent principal de lixiviation du niobium et du tantale.

Or la présente invention se propose non seulement d'améliorer la lixiviation mais également la récupération et la purification de Nb et Ta en partant de matériaux contenant une proportion non négligeable de ces éléments. Plus spécialement l'invention vise un procédé se dispensant d'avoir recours à HF, En n'utilisant pas HF, ce procédé évite les effets néfastes liés a cet acide, et augmente les rendements de séparation et de récupération de ces métaux.

Le procédé de l'invention prévoit pour la lixiviation d'utiliser l'acide fluosilicique ; de façon avantageuse l'acide fluosilicique est utilisé en solution aqueuse (concentration minimum de 10%) tel que commercialisé et de concentration pouvant aller jusqu'à 40% ou plus de H₂SiF₆. Néanmoins, l'addition d'un acide fort comme HCl, H₂SO₄, tout en augmentant l'acidité du milieu permet, dans certains cas, d'augmenter sensiblement la solubilité du niobium et du tantale dans la solution de lixiviation.

Suivant une caractéristique, la température de lixiviation est comprise entre la température ambiante et le point d'ébullition du milieu de lixiviation, à la pression où s'opère la lixiviation, de préférence entre 60 et 80°C, lorsque la lixiviation est réalisée sous la pression atmosphérique.

En procédant de la sorte pour la lixiviation, les demandeurs ont constaté de façon inattendue que non seulement on évitait l'emploi de l'acide fluorhydrique et ses inconvénients, mais que l'on pouvait opérer à des acidités beaucoup plus faibles.

Après l'étape de lixiviation, le procédé de l'invention prévoit la séparation et la récupération des composés de niobium et/ou de tantale dissous.

Pour ce qui est de la séparation, celle-ci s'effectuera sur la solution d'attaque fluosilicique et tout particulièrement par extraction liquide-liquide.

Le choix de l'extractant parmi ceux connus pour le niobium et le tantale s'orientera vers celui convenant le mieux au métal recherché et au degré de pureté visé : avantageusement on choisira la MIBK ou le TBP pour la séparation sélective du tantale ; le TBP sera plutôt choisi pour la coextraction des deux métaux et leur séparation ultérieure.

L'extractant sera utilisé suivant le cas pur ou dilué ; on utilisera alors dans ce dernier cas comme diluant des hydrocarbures aliphatiques ou aromatiques tels que ceux d'usage habituel en extraction par solvant. On ajoutera le cas échéant, selon un procédé classique en extraction liquide-liquide, un additif dans le mélange extractant-diluant pour supprimer une troisième phase éventuelle. A titre d'exemple de tels additifs on citera les alcools lourds comme le décanol.

La récupération du niobium et du tantale des phases organiques par désextraction en phase aqueuse suivie d'une précipitation par une base, elle-même suivie d'une opération de calcination, se fait suivant des procédés classiques en extraction liquide-liquide.

Les composés de Ta et Nb obtenus généralement sous forme d'oxydes peuvent contenir un peu de silice préjudiciable à leur pureté ; la troisième étape du procédé de l'invention se propose donc de séparer le tantale et (ou) le niobium de la silice.

Cette troisième étape s'associe aux avantages hydrométallurgiques des précédentes étapes en utilisant la pyrométallurgie (cinétiques élevées, production importante).

Conformément à l'invention, on fait appel à une carbochloration des composés de tantale ou de niobium issus de l'étape d'extraction comme stade ultime de purification de ces composés.

La carbochloration n'a souvent été retenue qu'en termes de préconcentration de matériaux à basses teneurs en vue d'un traitement hydrométallurgique ultérieur.

La séparation de Ta et Nb se fait parfois par distillation de leurs mélanges sous forme de chlorures obtenus soit par carbochloration des espèces oxydées correspondantes, soit par chloration des métaux impurs. Les techniques de chloration ou de carbochloration ne sont pas employées pour la purification de composés de Nb ou Ta déjà séparés.

Ainsi, la carbochloration appliquée selon l'invention consiste en un apport simultané de carbone et de chlore à un bain de sels fondus contenant les espèces a chlorer. Cet apport peut être réalisé soit en injectant simultanément du chlore et du carbone pulvérulent, soit en utilisant des composés organiques chlorés tels que CCl₄ ; il est également possible d'injecter simultanément un hydrocarbure et du chlore. Le sel fondu constitue un excellent milieu réactionnel aux propriétés physicochimiques extrêmement intéressantes à savoir bonne conductivité thermique, capacité calorifique importante, faible viscosité, faible tension de vapeur. La réaction conduit principalement à des chlorures de Ta (ou Nb) et Si volatils ainsi qu'à de l'oxyde de carbone.

Les chlorures de tantale ou niobium et de silicium ainsi obtenus sont séparés finalement grâce à l'écart de leur température d'ébullition, par condensations successives (TaCl₅ = 239°C, NbCl₅ = 249°C, SiCl₄ = 57,6°C).

La mise en oeuvre des trois étapes de lixiviation, d'extraction, de carbochloration relève de procédés classiques de l'hydrométallurgie et de la pyrométallurgie.

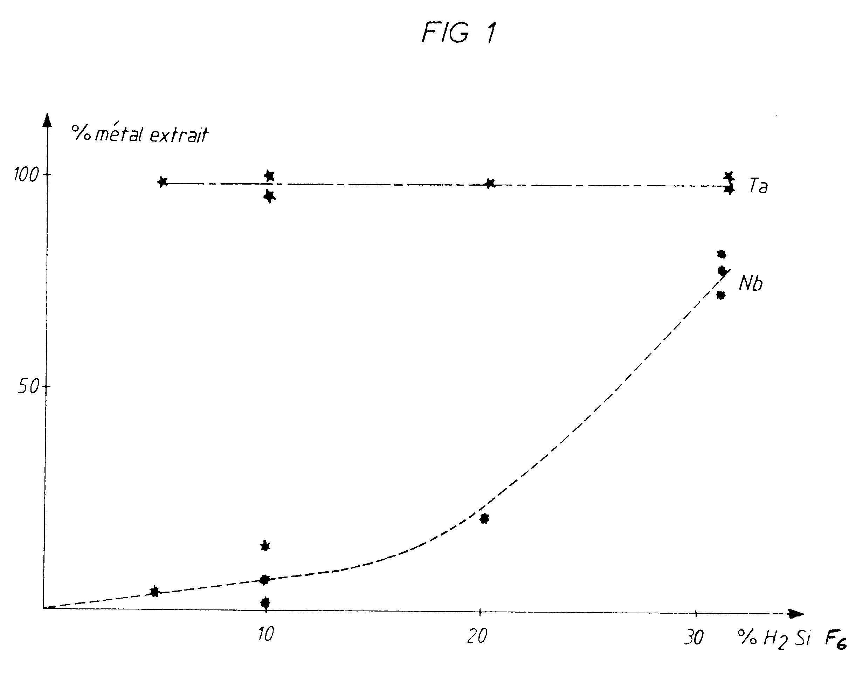

On notera tout particulièrement l'amélioration des rendements de séparation et/ou de récupération résultant entre autres de l'utilisation de l'agent de lixiviation selon l'invention. La portée et l'intérêt de l'invention ressortiront des exemples donnés ci-après avec référence aux figures 1 à 3 annexées.

### EXEMPLES.

### Exemple 1.

Un mélange de scories d'étain de Thaïlande (Ta₂O₅ 13,6%, Nb₂O₅ 9,8%) préalablement broyées (granulométrie 25 à 50 µm) et d'acide fluosilicique à 31% (20g de scories/litre) est agité à une température de 60-70°C. Après 30 minutes, 50% de niobium et du tantale sont passés en solution ; après 4 heures, le taux de solubilisation est supérieur à 80%. pour Nb et Ta.

### Exemple 2.

En utilisant les mêmes matières premières, des attaques sont réalisées à 60-70°C sous agitation magnétique (environ 700 tours/mn) pendant 4-5 heures, avec 50g/l de scories.
- % Nb et Ta solubilisés : environ 60 % et environ 30%

### Exemple 3.

En utilisant les mêmes conditions que dans l'exemple 2 avec 50 g/l de scories et un mélange acide H₂SiF₆ 28% + H₂SO₄ 4N, on obtient :
- % Nb et Ta solubilisés : 80 et 75%

### Exemple 4.

La lixiviation de Ta et Nb est réalisée à partir d'un minerai de tantalite (Ta₂O₅ 65%, Nb₂O₅ 29,5% - granulométrie 50 à 100 µm ; 100 g de solide/l acide) soit avec H₂SiF₆ seul (acide industriel à 34%) soit avec un mélange H₂SiF₆ 29% - H₂SO₄ 5N. Dans les conditions de température, agitation, temps de l'exemple 2, les taux de Nb et Ta solubilisés sont alors :
H₂SiF₆ : env 40 (Nb) et env 26 (Ta) %
H₂SiF₆ + H₂SO₄:env 65 (Nb) et env 50 (Ta) %

### Exemple 5.

L'extraction de Nb et Ta est réalisée à température ambiante, agitation 15 minutes. Les phases aqueuses de Nb et Ta dans H₂SiF₆ sont directement issues de l'attaque des scories ou dopées par addition de NbCl₅ et TaCl₅ : les concentrations sont respectivement de 1 à 10g/l et de 2 à 20 g/l en Nb et Ta.

La phase solvant est du TBP à 50%. dans le "Solvesso 150" (pré-équilibré avec une phase acide fluosilicique). La concentration en H₂SiF₆ varie de 5 à 31% et le rapport Va/Vo = 1 (Va = volume phase aqueuse et Vo = volume phase organique). Les courbes d'extraction sont reportées sur la figure 1.

A l'examen de ces courbes, on constate que Ta est extrait quantitativement dans toute la gamme d'acidité et que l'extraction de Nb augmente avec l'acidité :
H₂SiF₆ 5% :% Ta extrait 98,5 : % Nb extrait: environ 5.
H₂SiF₆ 31% :% Ta extrait 98 : % Nb extrait : environ 80.

### Exemple 6.

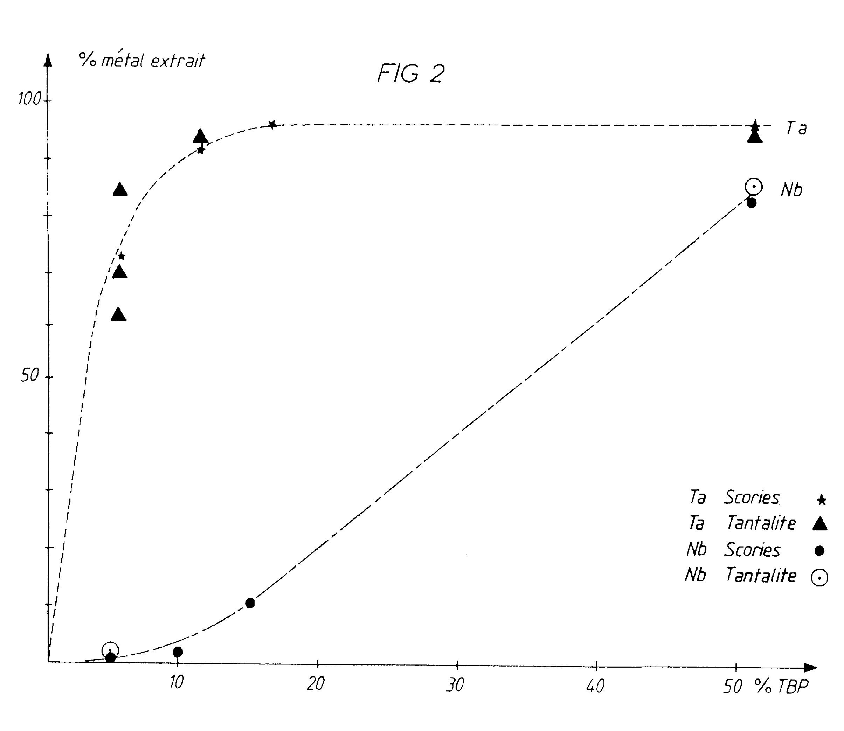

L'extraction de Ta et'Nb est réalisée dans les conditions opératoires de l'exemple 5 à partir de solutions aqueuses fluosiliciques (H₂SiF₆ ou H₂SiF₆ 28% + H₂SO₄ 4N) issues de la lixiviation de scories (Nb+Ta=3 à 6 g/l) ou de tantalite (Ta+Nb= 20 à 30 g/l). Les courbes d'extraction sont reportées sur la figure 2 ; elles montrent qu'à faible concentration en TBP des conditions d'extraction sélective de Ta peuvent être définies alors qu'à forte concentration il y a coextraction des deux métaux (taux d'extraction supérieur à 80% en un contact dans les conditions retenues).

### Exemple 7.

Les conditions de température, temps, volume de phases sont les mêmes que dans l'exemple 5. Les concentrations en Nb et Ta dans le mélange H₂SiF₆ 32% + H₂SO₄ 2N sont 7,6 g/l et 9,5 g/l (solution issue de la lixiviation de tantalite).
L'utilisation de concentrations différentes en TBP permet la récupération successive du tantale puis du niobium. Ainsi, une première étape avec un solvant constitué de TBP à 10% (p/v) avec 4% de décanol dans le diluant permet d'extraire 97,5% du tantale ; l'emploi de TPB à 50% (même diluant) pour traiter la phase aqueuse issue de l'étape 1 permet d'extraire la quasi-totalité du Nb et le Ta restant.

### Exemple 8.

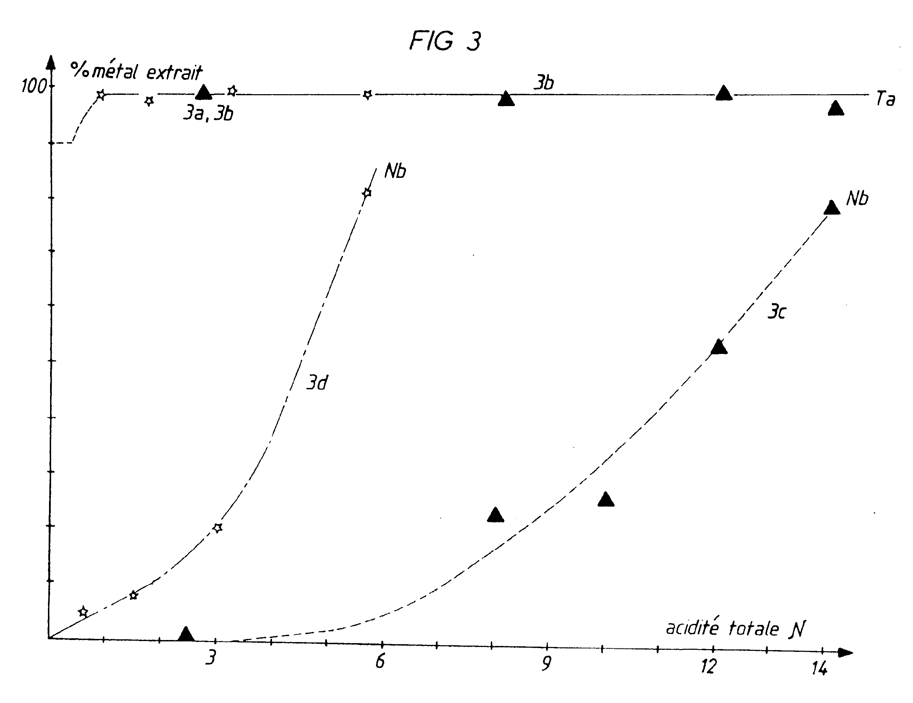

Cet exemple est donné à titre comparatif en se référant aux courbes de la figure 3. Il a été effectué pour comparer les taux d'extraction de Nb et Ta par le TBP (50% dans le "Solvesso 150") à partir de milieux HF + H₂SO₄ (Nb+Ta = 40 g/l) ou H₂SiF₆ (Nb+Ta = 3 à 30 g/l). L'examen des courbes, obtenues dans les conditions opératoires de l'exemple 5, montre que :
- l'extraction du tantale est quantitative avec les deux typas de solutions aqueuses dans la gamme d'acidité considérée :
   . H₂SiF₆:5 à 31% soit 0,75 à 5,5N (courbe 3a),
   . HF+H₂SO₄: de HF 0,5 N + H₂SO₄ 2 N à HF 5 N + H₂SO₄ 9 N: (courbe 3b)
- l'extraction du niobium est négligeable à faible acidité et elle augmente avec celle-ci. Si avec les mélanges fluo/sulfuriques (courbe 3c), il faut des acidités fortes, telles que HF 5 N + H₂SO₄ 9 N, pour atteindre un taux d'extraction de 80% , avec l'acide fluosilicique, une acidité de 5,5 N est suffisante (courbe 3d) pour obtenir le même résultat.

### Exemple 9.

On agite volume à volume pendant 15 minutes à température ambiante une solution fluosilicique issue de l'attaque de scories (Nb 2 g/l, Ta 2g/l) avec de la MIBK employée pure. Dans la gamme d'acidité considérée (5 à 31% H₂SiF₆), l'extraction de Ta est pratiquement quantitative et celle de Nb égale ou inférieure à 10%.

### EXEMPLE 10

On mélange 450 g de Ta₂O₅ obtenu par précipitation de l'hydroxyde suivi d'une calcination et contenant 0,6 % de SiO₂, avec 35 g de carbone. Après agglomération en boulettes de taille environ 1 cm (pellets), le produit est chloré à 850°C à l'aide d'un courant de chlore gazeux et on obtient 650 g de Tacl₅ contenant 1,1 de SiCl₄.

A l'aide d'une colonne de distillation on récupère 610 g de TaCl₅ contenant moins de 20 ppm de SiCl₄ et une fraction riche en SiCl₄ qui est renvoyée en tête de fabrication.

## Revendications

1. Procédé d'obtention de composés de niobium et/ou de tantale exempts d'impuretés minérales à partie de divers matériaux contenant l'un ou l'autre de ces métaux ou les deux, procédé caractérisé en ce qu'il comporte les stades opératoires suivants :
(a) lixiviation à l'acide fluosilicique de concentration minimum de H₂SiF₆ de 10% pouvant aller jusqu'à 40% ou plus, en l'absence d'acide fluorhydrique HF acide additionné ou non d'un acide minéral fort choisi parmi HCl ou H₂SO₄ ;
(b) séparation du milieu aqueux acide issu de (a) de Nb et/ou Ta par extraction liquide-liquide, en faisant appel à un extractant organique approprié ;
(c) récupération du niobium et/ou du tantale des phases organiques par désextraction en phase aqueuse suivie d'une précipitation par une base, elle-même suivie d'une opération de calcination ;
(d) purification des composés de tantale et/ou de niobium pour les débarrasser d'autres éléments indésirables, en particulier de silice, par carbochloration.

2. Procédé selon la revendication 1, caractérisé en ce que la température de lixiviation du stade (a) est comprise entre la température ambiante et le point d'ébullition du milieu de lixiviation à la pression où celle-ci s'opère, de préférence entre 60° et 80°C lorsque cette lixiviation est réalisée sous la pression atmosphérique.

3. Procédé selon la revendication 1 ou 2, caractérisé en ce que l'extractant organique est choisi parmi les suivants : méthylisobutylcétone (MIBK), cyclohexanone, tributylphosphate (TBP), amides du type dialkylacétamide ou sels d'ammonium quaternaire.

4. Procédé selon l'une quelconque des revendications 1 à 3, caractérisé en ce que la carbochloration du stade (d) est effectuée par un apport de chlore ou de composés organiques chlorés dans un bain de sels fondus contenant les espèces à chlorer ; le carbone est apporté, si nécessaire, par injection de graphite ou de charbon actif pulvérulent ou d'un hydrocarbure, la réaction conduisant à des chlorures de Ta ou Nb volatils, aux impuretés chlorées ainsi qu'à de l'oxyde de carbone.

## Patentansprüche

1. Verfahren zur Gewinnung von Verbindungen von Niob und/oder Tantal, welche frei von mineralischen Verunreinigungen sind, aus verschiedenen, das eine oder das andere dieser Metalle oder beide enthaltenden, unterschiedlichen Materialien, wobei das Verfahren dadurch gekennzeichnet ist, daß es folgende Verfahrensstufen umfaßt:
(a) Auslaugen mit Hilfe von Fluorkieselsäure mit einer Minimalkonzentration von H₂SiF₆ von 10%, welche bis zu 40% oder höher reichen kann, bei Abwesenheit von Flußsäure HF, wobei der Säure eine starke anorganische Säure ausgewählt unter HCl oder H₂SO₄ zugesetzt oder nicht zugesetzt sein kann;
(b) Abtrennung von Nb und/oder Ta aus dem aus (a) hervorgegangen, sauren wässrigen Milieu durch Flüssig-Flüssig-Extraktion unter Zuhilfenahme eines geeigneten organischen Extraktionsmittels;
(c) Gewinnung von Niob und/oder Tantal aus den organischen Phasen durch Wiederextraktion in wässrige Phase gefolgt von einer Ausfällung durch eine Base, wobei dieses von einem Kalzinierungsvorgang gefolgt wird;
(d) Reinigung der Verbindungen von Tantal und/oder Niob zur Entfernung von anderen nicht erwünschten Elementen, insbesondere von Silizium, durch Carbochlorierung.

2. Verfahren nach Anspruch 1, dadurch gekennzeichnet, daß die Temperatur der Auslaugung in der Stufe (a) zwischen Umgebungstemperatur und Siedetemperatur des Auslaugungsmediums beim Betriebsdruck liegt, vorzugsweise zwischen 60° und 80° C, wenn diese Auslaugung unter atmosphärischem Druck durchgeführt wird.

3. Verfahren nach Anspruch 1 oder 2, dadurch gekennzeichnet, daß das organische Extraktionsmittel unter folgenden ausgewählt wird: Methylisobutylketon (MIBK), Cyclohexanon, Tributylphosphat (TBP), Amiden des Typs Dialkylacetamid oder quaternären Ammoniumsalzen.

4. Verfahren nach einem der Ansprüche 1 bis 3, dadurch gekennzeichnet, daß die Carbochlorierung in der Stufe (d) durch eine Zufuhr von Chlor oder organischen chlorierten Verbindungen in einem Bad aus geschmolzenen Salzen, welches die zu chlorierenden Stoffe enthält, durchgeführt wird, wobei der Kohlenstoff, falls erforderlich, durch Injektion von Graphit oder pulverförmiger Aktivkohle oder eines Kohlenwasserstoffes durchgeführt wird, wobei die Reaktion zu flüchtigen Chloriden von Ta oder Nb, zu chlorierten Verunreinigungen wie auch zu Kohlenoxid führt.

## Claims

1. An improved process for obtaining niobium and/or tantalum compounds free from mineral impurities from various materials containing one or the other or both of said metals, the process being characterized in that it comprises the following operational stages:
(a) in the absence of hydrofluoric acid HF, leaching with fluorosilicic acid having a minimum H₂SiF₆ concentration of 10% to 40% or more, with or without the addition to the acid of a strong mineral acid selected from HCl or H₂SO₄;
(b) separation of Nb and/or Ta from the acid aqueous medium from (a) by liquid-liquid extraction, using a suitable organic extractant;
(c) recovery of the niobium and/or tantalum from the organic phases by re-extraction in the aqueous phase followed by precipitation by a base and a subsequent calcination operation;
(d) purification of the tantalum and/or niobium compounds to remove other undesirable elements, more particularly silica, by carbochlorination.

2. A process according to claim 1, characterized in that the leaching temperature of stage (a) is between ambient temperature and the boiling point of the leaching medium at the pressure at which leaching is performed, preferably between 60° and 80°C when leaching is performed at atmospheric pressure.

3. A process according to claims 1 or 2, characterized in that the organic extractant is selected from the following: methylisobutyl ketone (MIBK), cyclohexanone, tributyl phosphate (TBP), amides of the dialkyl acetamide type or salts of quaternary ammonium.

4. A process according to any of claims 1 to 3, characterized in that the carbochlorination of stage (d) is performed by a supply of chlorine or chlorinated organic compounds to a bath of molten salts containing the species to be chlorinated: if necessary, the carbon is added by the injection of graphite or pulverulent activated charcoal or a hydrocarbon, the reaction leading to volatile chlorides of Ta or Nb, the chlorinated impurities and carbon monoxide.
